**Europäisches Patentamt**

**European Patent Office**

**Office européen des brevets**

(19)

(11) Veröffentlichungsnummer : **0 253 899 B1**

(12) **EUROPÄISCHE PATENTSCHRIFT**

(45) Veröffentlichungstag der Patentschrift :
**11.03.92 Patentblatt 92/11**

(21) Anmeldenummer : **87900743.3**

(22) Anmeldetag : **19.12.86**

(86) Internationale Anmeldenummer :
**PCT/SU86/00138**

(87) Internationale Veröffentlichungsnummer :
**WO 87/03824 02.07.87 Gazette 87/14**

(51) Int. Cl.$^5$ : **B01D 29/11**

(54) **VORRICHTUNG MIT PERIODISCHEM GANG ZUR FILTRATION VON FLÜSSIGEN MEDIEN.**

(30) Priorität : **24.12.85 SU 3988601**
**24.12.85 SU 3988602**
**24.12.85 SU 3988603**
**24.12.85 SU 3988606**
**24.12.85 SU 3988609**
**24.12.85 SU 3988610**
**24.12.85 SU 3988613**
**24.12.85 SU 3988614**
**24.12.85 SU 3988615**

(43) Veröffentlichungstag der Anmeldung :
**27.01.88 Patentblatt 88/04**

(45) Bekanntmachung des Hinweises auf die
Patenterteilung :
**11.03.92 Patentblatt 92/11**

(84) Benannte Vertragsstaaten :
**AT DE FR GB IT**

(56) Entgegenhaltungen :
**AT-A- 376 140**

(56) Entgegenhaltungen :
**CH-A- 500 747**
**DE-B- 2 124 717**
**US-A- 4 283 281**
**US-B- 3 931 015**

(73) Patentinhaber : **TREST 'JUZHVODOPROVOD'**
**ul. Gagarina, 135/1**
**Krasnodar, 350049 (SU)**

(72) Erfinder : **SHISHKIN, Viktor Vasilievich**
**ul. Festivalnaya, 16-5**
**Krasnodar, 350049 (SU)**
Erfinder : **KRYAZHEVSKIKH, Nikolai**
**Fedorovich**
**ul. Krasnykh partizan, 559-13**
**Krasnodar, 350049 (SU)**
Erfinder : **SHAPOVALOV, Jury Petrovich**
**ul. Turgeneva, 18**
**Krasnodar, 350049 (SU)**

(74) Vertreter : **Finck, Dieter et al**
**Patentanwälte v. Füner, Ebbinghaus, Finck**
**Mariahilfplatz 2 & 3**
**W-8000 München 90 (DE)**

EP 0 253 899 B1

EP 0 253 899 B1

## Beschreibung

Die Erfindung betrifft eine Filtervorrichtung mit einem Gehäuse, mit einem schlauchförmigen, unter Bildung eines Ringraumes stülpbaren Filterelement, dessen eines Ende am Umfang des Gehäuses befestigt ist und dessen anderes Ende mit einer oberhalb des Filterelements angeordneten Hebevorrichtung verbunden ist, mit einer mit dem Gehäuse verbundenen Zuführeinrichtung für die Zuführung des zu filternden Mediums, mit einer mit dem Gehäuse verbundenen Ableiteinrichtung für das Ableiten des gereinigten Mediums und mit einer Abführeinrichtung für die Rückstandsabführung.

Aus der CH-A 500 747 ist eine solche Filtervorrichtung bekannt, die einen äußeren, konischen und durchlässigen Gehäuseteil und einem in diesem konzentrisch angeordneten, zylindrischen und durchlässigen inneren Gehäuseteil aufweist. Zwischen diesen Gehäuseteilen ist als Filterelement ein schlauchförmiges Filtertuch angeordnet, dessen Ränder an den oberen Enden der beiden Gehäuseteile befestigt sind. Diese Filtervorrichtung ist in ihrer Filtrierstellung durch einen Deckflansch verschlossen. Das zu filtrierende Medium wird über durch den Deckflansch hindurchgehende Zuführleitungen in den von dem Filtertuch gebildeten Ringraum solange geführt und durch das Filtertuch gefiltert, bis der Ringraum mit Rückstand gefüllt ist. Dabei wird der Wirkungsgrad der Filterung ständig geringer, da die Filterfläche mit größer werdendem Rückstand kleiner wird. Nach Abschluß einer Filterperiode wird der Deckflansch zusammen mit dem inneren Gehäuseteil durch eine äußere Hebevorrichtung angehoben, wodurch das Filtertuch gestreckt und für seine Reinigung von außen zugänglich ist. Da das Filtertuch dieser Filtervorrichtung schnell verstopft ist, ist eine häufige Reinigung des Filtertuchs notwendig. Der Wirkungsgrad dieser Filtervorrichtung ist also gering. Außerdem können mit dieser Filtervorrichtung keine starkriechenden oder giftige Stoffe gefiltert werden, da sie sowohl bei der Filtrierung als auch bei der Reinigung ins freie austreten können.

Der Erfindung liegt die Aufgabe zugrunde, ausgehend von der Filtervorrichtung der gattungsgemäßen Art mit konstruktiv einfachen Mitteln eine Filtervorrichtung zu schaffen, mit der mit hohem Wirkungsgrad auch Stoffe mit starkem Geruch oder giftige Stoffe gefahrlos gefiltert werden können.

Diese Aufgabe wird erfindungsgemäß dadurch gelöst, daß das Gehäuse geschlossen, druckdicht und durch das Filterelement, das während des Filtrierens absenkbar ist, in einem oberen und einen unteren Gehäuseraum getrennt ist, daß die Hebevorrichtung innerhalb des Gehäuses angeordnet ist, und daß die Abführeinrichtung mit dem oberen Gehäuseraum verbunden ist.

Die druckdichte Ausführung des Gehäuses ermöglicht es, Stoffe mit starkem Geruch oder giftige Stoffe gefahrlos zu filtern. Dabei kann der Wirkungsgrad der Filtervorrichtung erhöht werden, wenn in dem Raum oberhalb des Filterelements ein erhöhter Druck und in dem Raum unterhalb des Filterelements ein Unterdruck erzeugt wird. Dadurch, daß die Hebevorrichtung innerhalb des Gehäuses angeordnet ist, kann das Filterelement während des Filtriervorgangs abhängig von der Rückstandsmenge so bewegt werden, daß ständig eine saubere Filtrierfläche zur Verfügung steht. Dies erhöht zusätzlich den Wirkungsgrad der Filtervorrichtung.

Die erfindungsgemäße Filtervorrichtung eignet sich besonders zur Abwasserreinigung.

Vorteilhafterweise wird die Hebevorrichtung von einer Antriebstrommel, einem darauf auf- und abwickelbaren, mit dem anderen Ende des Filterelements verbundenen flexiblen Zugglied und einer das Drehmoment der Trommel regelnden Einrichtung gebildet. Auf diese Weise ist es möglich, daß der Schlauch erst verschoben wird, wenn sich eine gewisse Menge an Rückstand in seinem Ringraum befindet oder wenn der Druck des leichtflüssigen Mediums einen bestimmten Wert erreicht.

Dabei ist es günstig, wenn das flexible Zugglied der Hebevorrichtung über einen biegsamen Ring mit dem anderen Ende des Filterelements verbunden ist, wobei beiderseits des Filterelements Zerstäuberdüsen angeordnet sind, die mit der Zuführeinrichtung in Verbindung stehen. Der biegsame Ring dient als Verschluß, der beim Anheben des Schlauches dessen offenes Schlauchende verschließt. Dadurch ist es möglich, daß zu filternde Medium von unten zuzuführen.

Für eine ausgezeichnete Reinigung der Filterfläche können beiderseits des Filterelements unterhalb der Hebevorrichtung Kratzer in Form von Lochplatten schräg angebracht werden, die einen mit der Zuführeinrichtung verbundenen Innenkanal aufweisen.

In einer bevorzugten Ausführungsform der Filtervorrichtung ist der Raum des Gehäuses oberhalb des Filterelements durch eine Trennwand in einen oberen Teil und einen unteren teil getrennt. Die Hebevorrichtung wird von einem im oberen Teil vorgesehenen druckdichten Schlauch gebildet, dessen eines Ende durch den Schlitz in den unteren Teil geführt und mit dem anderen Ende des Filterelements verbunden ist, während das andere des Schlauches nach außen umgestülpt und unter Bildung einer Ringkammer längs des Umfangs des Gehäuses befestigt ist. Dabei ist die Ringkammer mit einem elastischen Druckmedium gefüllt.

Um die Filterfläche des Filterelements bei dieser Ausführungsform zuverlässig zu reinigen, können in der Trennwand mit der Abführeinrichtung verbundene Kanäle vorgesehen werden, die in den unteren Teil einmünden, in dem beiderseits des Filterelements an der Trennwand befestigte Kratzer angeordnet sind.

2

Für eine Feinstfiltrierung des zu filtrierenden Mediums ist es von Vorteil, innerhalb des Filterelements zusätzliche schlauchförmige Filterelemente koaxial anzuordnen, deren Enden jeweils mit der Innenseite nach außen gewendet und unter Bildung von mit der Ableiteinrichtung verbundenen Ringkammern längs des Umfangs des Gehäuses aufeinanderfolgend befestigt sind.

Zur Entfernung metallischer Teilchen bestehen die zusätzlichen Filterelemente bevorzugt aus einem elektrisch leitenden Werkstoff und sind an außerhalb des Gehäuses angeordnete Spannungsquellen angeschlossen, die ein magnetisches oder elektrostatisches Feld erzeugen.

In einer weiteren vorteilhaften Ausführungsform der Filtervorrichtung ist der Ringraum des Filterelements mit einem Filterhilfsmittel gefüllt, wobei im Gehäuse mit dem oberen Gehäuseraum verbundene Zusatzbehälter angeordnet sind, von denen jeder in seinem unteren Bereich mit der Abführeinrichtung in Verbindung steht und mit einer Spüleinrichtung zum Spülen des Filterhilfsmittels versehen ist, die von einem biegsamen Schlauch und einer Antriebstrommel gebildet wird, an der ein Ende des biegsamen Schlauches befestigt ist, während das andere Ende mit der Innenseite nach außen gewendet und längs des Umfangs an den Wänden des Zusatzbehälters befestigt ist.

Die Aufgabe wird auch dadurch gelöst, daß das Gehäuse geschlossen, druckdicht und durch das Filterelement, das während einer Zuleitung von Spülflüssigkeit absenkbar ist, in einen oberen und einen unteren Gehäuseraum getrennt ist, daß die Hebevorrichtung innerhalb des Gehäuses angeordnet ist, daß innerhalb des Filterelements ein zusätzliches schlauchförmiges Filterelement koaxial angeordnet ist, dessen eines Ende mit der Innenseite nach außen gewendet und unter Bildung einer Ringkammer längs des Umfangs des Gehäuses befestigt ist, daß die Abführeinrichtung mit dem oberen Gehäuseraum und dem Ringraum und die Zuführeinrichtung mit dem unteren Gehäuseraum verbunden ist und daß an dem unteren Gehäuseraum ein Lochstutzen angeordnet ist, der mit der Ableiteinrichtung in Verbindung steht, wobei die Filterelemente eine unterschiedliche Dichte aufweisen.

Ausführungsbeispiele der Erfindung werden nachstehend anhand von Zeichnungen näher erläutert. Es zeigt:

Fig. 1 eine erste Ausführungsform einer Filtervorrichtung;
Fig. 2 eine zweite Ausführungsform der Filtervorrichtung;
Fig. 3 eine dritte Ausführungsform der Filtervorrichtung;
Fig. 4 schematisch eine Hebevorrichtung;
Fig. 5 eine vierte Ausführungsform der Filtervorrichtung;
Fig. 6 eine schematische Draufsicht auf eine Kratzeinrichtung der Filtervorrichtung von Fig. 5;
Fig. 7 eine fünfte Ausführungsform der Filtervorrichtung;
Fig. 8 eine sechste Ausführungsform der Filtervorrichtung;
Fig. 9 eine siebte Ausführungsform der Filtervorrichtung;
Fig. 10 eine achte Ausführungsform der Filtervorrichtung mit Zusatzbehältern;
Fig. 11 eine Draufsicht auf die Zusatzbehälter der Filtervorrichtung von Fig. 10.

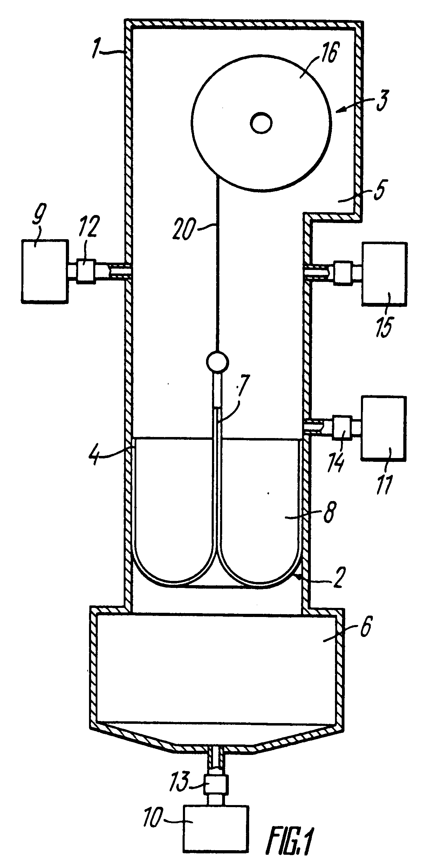

Die in den Figuren 1 und 2 gezeigten Ausführungsformen der Filtervorrichtungen weisen ein druckdichtes hohles Gehäuse 1 auf, in dem ein biegsames Filterelement 2 angeordnet ist, das mit Hilfe einer Hebevorrichtung 3 relativ zu seiner Befestigung verschiebbar ist.

Das Filterelement 2 ist schlauchförmig und besteht aus einem je nach der Art des zu filternden Mediums (Flüssigkeit oder Gas), dem Filtrationsgrad des Mediums sowie je nach dem Industriezweig, in dem die Filtervorrichtung zum Einsatz gelangt, gewählten Werkstoff.

Das eine Ende 4 des Filterelements 2, im folgenden Schlauch 2 genannt, ist mit der Innenseite nach außen gestülpt, und längs seines Umfangs am Gehäuse 1 befestigt, wobei der Hohlraum des Gehäuses 1 in einen oberen Gehäuseraum 5 und einen unteren Gehäuseraum 6 aufgeteilt ist. Das andere Ende 7 des Schlauches 2 ist an der Hebevorrichtung 3 befestigt. Durch die Befestigung des mit der Innenseite nach außen gestülpten Endes 4 des Schlauches 2 am Gehäuse 1 bildet sich um den restlichen Schlauchteil herum ein Ringraum 8, dem das zu filternde Medium zugeleitet wird und der sich beim Absenken des Schlauches 2 unter dem Druck des zu filternden Mediums und dem daraus folgenden allmählichen mit der Innenseite nach außen erfolgenden Wenden des Schlauches vergrößert oder beim Heben durch die Hebevorrichtung 3 verringert. Die Hebevorrichtung 3 befindet sich in dem oberen Gehäuseraum 5 oberhalb des Schlauches 2.

Die Filtervorrichtung enthält auch eine Zuführeinrichtung 9 für die Zuführung des zu filternden Mediums, eine Ableiteinrichtung 10 für die Ableitung des gereinigten Mediums und eine Abführeinrichtung 11 für die Abführung des Rückstandes, die je nach dem gewählten Filtriermedium- und Filterrückstandsabführungsschema über Rückschlagventile 12, 13 bzw. 14 mit den Gehäuseräumen 5 oder 6 in Verbindung stehen. So ist der obere Gehäuseraum 5 über das Ventil 14 ständig mit der Abführeinrichtung 11 verbunden und kann auch über das Rückschlagventil 12 mit der Zuführeinrichtung in Verbindung treten.

Bei Fig. 1 ist der untere Gehäuseraum 6 über das Ventil 13 mit der Ableiteinrichtung 10 verbunden. Der

EP 0 253 899 B1

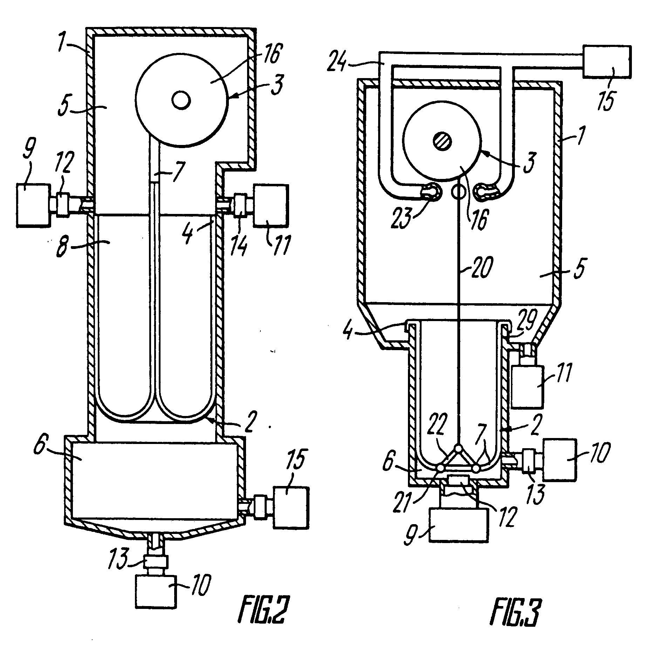

obere Gehäuseraum 5 steht mit einem Zuleitungssystem 15 für Spülflüssigkeit in Verbindung. Bei der Ausführungsform von Fig. 3 erfolgt die Zuführung des zu filternden Mediums durch den unteren Gehäuseraum 6, genauso wie die Spülflüssigkeitszuleitung aus dem Zuleitungssystem 15 gemäß Fig. 2. Bei der Ausführungsform von Fig. 2 sickert die unter Druck in den unteren Gehäuseraum 6 eingeführte Spülflüssigkeit durch den Schlauch 2 hindurch, wodurch der Rückstand weggespült und die Schlauchoberfläche gereinigt wird. Die Hebevorrichtung 3 enthält, wie es Fig. 4 zeigt, eine Antriebstrommel 16, die durch einen Elektromotor 17 angetrieben wird, dessen Welle über eine Kupplung 18 mit der Trommelachse verbunden ist, und eine das Drehmoment der Trommel regelnde Einrichtung 19, z.B. ein Klinkengesperre, das beim Absenken des Schlauches 2 auslöst. Der Schlauch 2 sinkt nur bei Erreichen eines auf ihn auszuübenden Solldrucks herab, der durch den im Ringraum 8 gespeicherten Rückstand oder durch das zu filternde Medium, z.B. eine Flüssigkeit oder Luft in dem oberen Gehäuseraum 5 erzeugt wird, wenn die Filtervorrichtung zum Filtern einer Flüssigkeit oder von Luft verwendet wird. Der Schlauch 2 kann, wie bei der Ausführungsform von Fig. 2 selbst auf die Trommel 16 aufgewickelt werden oder das Ende 7 des Schlauches 2 kann wie bei der Ausführungsform von Fig. 1 und 3 mit einem flexiblen, auf die Trommel 16 aufgewikkelten Zugglied 20, z.B. einem Seil verbunden werden. Dabei ist bei der Ausführungsform von Fig. 3 das Zugglied 20 der Hebevorrichtung 3 mit dem Ende 7 des Schlauches 2 über einen biegsamen Ring 21 verbunden, der sich beim Heben des Schlauches biegt und als Verschluß für dieses Schlauchende dient, wobei der biegsame Ring 21 mittels eines Stropps 22 mit dem Zugglied 20 verbunden ist.

Das Wegspülen des Rückstandes von der Oberfläche des Schlauches 2 erfolgt nach seiner Aufwärtsbewegung durch Zerstäuberdüsen 23, die in dem oberen Gehäuseraum 5 unterhalb der Hebevorrichtung 3 angeordnet und mittels Stutzen 24 mit dem Zuleitungssystem 15 für die Spülflüssigkeit verbunden sind, als welche die Filtrierflüssigkeit ausgenutzt werden kann, d.h. das Zuleitungssystem 15 steht mit der Zuführeinrichtung 9 in Verbindung (nicht gezeigt).

In dem oberen Gehäuseraum 5 der Ausführungsform von Fig. 5 sind Kratzer 25 unterhalb der Hebevorrichtung 3 angeordnet, wobei sich die Kratzer 25, wie Fig. 6 zeigt, beiderseits des Schlauches 2 befinden und jeder von Ihnen in Form einer Lochplatte 26 mit einem Innenkanal 27 ausgebildet ist, der über einen Stutzen 28 mit dem Spülflüssigkeitszuleitungssystem 15 in Verbindung steht.

Das Schlauchende 4 kann z.B. durch Leim oder Befestigungsteile längs des Umfangs am Gehäuse 1 befestigt werden. Dabei läßt sich der Schlauch 2 auch, wie bei der Ausführungsform von Fig. 3, an einem am Gehäuse 1 vorgesehenen Ringvorsprung 29 befestigen.

Bei den Ausführungsformen nach Fig. 1 und 2 wird mit der Zuführeinrichtung 9 dem oberen Gehäuseraum 5 das zu filternde Medium zugeführt, das sich im Ringraum 8 des Schlauches 2 ansammelt.

Der Schlauch 2 bewegt sich unter dem Einfluß des durch das zu filternde Medium und den im Ringraum 8 gespeicherten Rückstand erzeugten Drucks abwärts, was durch die das Drehmoment regelnde Einrichtung 19 regelbar ist.

Das zu filternde Medium durchdringt die Seitenfläche des Schlauches 2 und wird von mechanischen Beimischungen befreit, die sich daran ablagern. Mit der Vergrößerung der Rückstandsmenge an dem Schlauch 2 nimmt der Filtrationswiderstand zu. Nachdem der Druck im Ringraum 8 das Drehwiderstandsmoment der Trommel 16 überschritten hat, dreht diese durch, und es wird eine reine Oberfläche des Schlauches 2 der Filterungszone zugeführt. Nachdem die ganze Filterfläche des Schlauches 2 ausgenutzt worden ist, wird ein Signal an das Ventil 12 abgegeben, das daraufhin die Zufuhr des zu filternden Mediums ab- und das Spülflüssigkeitszuleitungssystem 15 einschaltet. Ein Signal wird auch an den Elektromotor 17 gegeben, der die Trommel zu drehen beginnt, die daraufhin den Schlauch 2 oder das Zugglied 20 (Fig. 3) aufwickelt.

Der Schlauch 2 bewegt sich aufwärts, und die den Rückstand von der Oberfläche des Schlauches 2 wegspülende Spülflüssigkeit wird zusammen mit dem Rückstand in die Abführeinrichtung 11 verdrängt, wobei bei der Ausführungsform von Fig. 5 die Kratzer 25 während der Aufwärtsbewegung des Schlauches den Rückstand von diesem entfernen und seine Filterfläche reinigen.

Nachdem der Schlauch vollständig gehoben ist, wird ein Befehl zum Abstellen des Elektromotors, zum Öffnen des Ventils 12 und zum Schließen des Ventils 14 gegeben, wonach sich der Zyklus wiederholt.

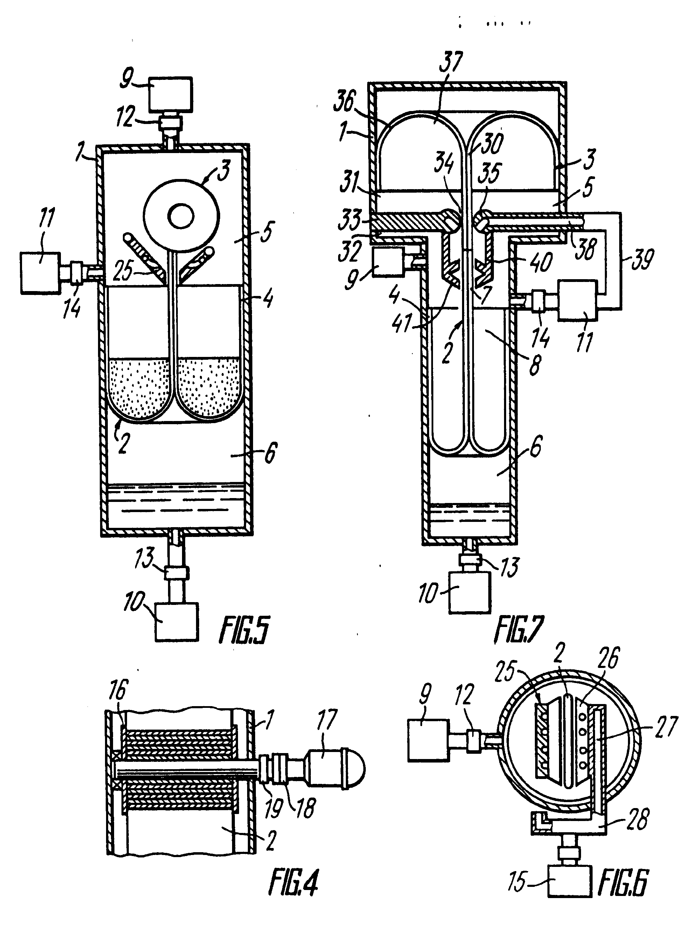

Gemäß Fig. 7 kann die Hebevorrichtung 3 auch in Form eines dichten Schlauches 30 ausgebildet werden. Dabei ist der obere Gehäuseraum 5 durch eine Trennwand 33 mit einem Schlitz 34 in zwei Teile 31 und 32 aufgeteilt. Am Schlitz 34 entlang sind Dichtungsmittel 35 angebracht. Durch den Schlitz 34 mit den Dichtungsmitteln 35 ist ein Ende des Schlauches 30 hindurchgeführt und im unteren Teil 32 des oberen Gehäuseraums 5 mit dem Ende 7 des Schlauches 2 verbunden. Das andere Ende 36 des Schlauches 30 ist mit der Innenseite nach außen gestülpt, im oberen Teil 31 des oberen Gehäuseraums 5 am Gehäuse 1 befestigt und bildet oberhalb der Trennwand 33 eine Ringkammer 37, die mit einem elastischen Medium, z. B. Druckluft gefüllt ist. In der Trennwand 33 sind Kanäle 38 vorgesehen, die über einen Stutzen 39 mit der Abführeinrichtung 11 in Verbindung stehen. Die Kanäle 38 münden durch die Dichtungsmittel 35 in den unteren Teil 32 des oberen Gehäus-

4

eraums 5 ein.

In dem unteren Teil 32 sind beiderseits des Schlauches 2 angeordnete Kratzer 41 mittels Konsolen 40 an der Trennwand 33 befestigt. Dabei können die Kratzer 41 so aufgebaut werden, wie es Fig. 7 zeigt, oder dieselbe konstruktive Gestaltung haben wie die Kratzer 25 (Fig. 6) der Ausführungsform von Fig. 6.

Bei der Ausführungsform von Fig. 7 strömt das zu filternde Medium in den Ringraum 8 des Schlauches 2 ein, durch den es gefiltert wird. Dabei durchfließt ein Teil des Mediums die Kratzer 41, die bei der Verschiebung des Schlauches 2 den Rückstand von seiner Oberfläche entfernen. Der von der Oberfläche des Schlauches entfernte Rückstand wird durch den Kanal 38 und den Stutzen 39 in die Abführeinrichtung 11 geführt.

Die Verschiebung des Schlauches 2 relativ zu den Kratzern 41 erfolgt aufgrund eines den Schlauch 30 in Bewegung setzenden Druckunterschieds in den Teilen 31 und 32 des oberen Gehäuseraums 5. Dabei wird der Druckunterschied durch die Menge des dem Ringraum 8 des Schlauches 2 zugeführten Filtermediums erzeugt.

Nachdem der Schlauch 30 in die untere Lage gebracht und die Luft in der Ringkammer 37 des Schlauches 30 auf den maximalen Wert komprimiert ist, wird die Zufuhr des Filtermediums zum Schlauch 2 unterbrochen. Das Medium wird durch den Schlauch 2 gefiltert, wobei seine Menge im Ringraum 8 des Schlauches 2 abnimmt. Demzufolge nimmt der Mediumdruck auf die Luft in der Ringkammer 37 ab.

Unter dem Druck der in der Ringkammer 37 des Schlauches 30 befindlichen Luft bewegt sich der Schlauch 30 aufwärts. Nachdem der Schlauch 30 in seine obere Endstellung gebracht worden ist, erreicht der Luftdruck einen minimalen Wert, die Zuführeinrichtung 9 wird eingeschaltet und das zu filternde Medium wird dem Ringraum 8 des Schlauches 2 zugeleitet.

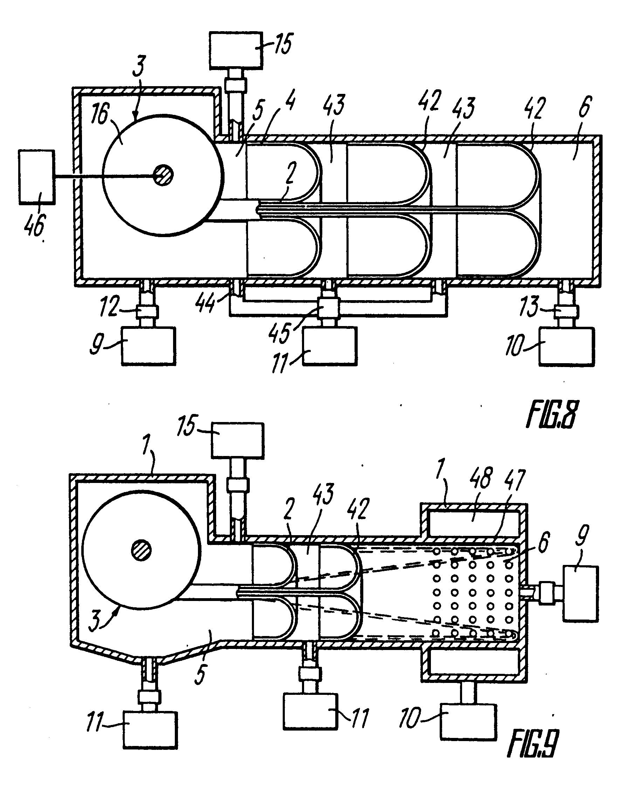

Bei der Ausführungsform der Filtervorrichtung von Fig. 8 sind im Schlauch 2 zusätzliche schlauchförmige Filterelemente 42, die im folgenden als Schläuche 42 bezeichnet sind, aus Filterstoffen unterschiedlicher Dichte koaxial angeordnet, wodurch eine feinere Filtration des Mediums ermöglicht wird. Genauso wie der Schlauch 2 sind die Enden der Schläuche 42 mit der Innenseite nach außen gestülpt, über die Länge des Gehäuses 1 verteilt und hintereinander daran befestigt, wodurch sich Ringkammern 43 zwischen den mit der Innenseite nach außen gestülpten Schlauchabschnitte bilden. Jede Ringkammer 43 steht über Stutzen 44 und ein Rückschlagventil 45 mit der Abführeinrichtung 11 in Verbindung. Da das zu filternde Medium unter Druck gefördert wird, kann die Filtervorrichtung waagerecht aufgestellt werden, wie dies Fig. 8 zeigt.

Bei dieser konstruktiven Ausführung des biegsamen Filterelements passiert das zu filternde Medium folgerichtig die Schläuche 2 und 42. In jedem Ringraum 43 werden Beimischungen bestimmter Fraktionen zurückgehalten, die sich an der Oberfläche der Schläuche absetzen, und das gereinigte Medium wird aus dem Gehäuseraum 6 in die Ableiteinrichtung 10 hinausgeführt. Unter der Druckwirkung des Filtermediums und der gespeicherten Rückstände dreht die Antriebstrommel 16 durch. Die sich mit der Innenseite nach außen wendenden Schläuche 2 und 42 werden am Gehäuse entlang geführt, wobei an die Filterung reine Schlauchabschnitte herangeführt werden. Nachdem der in Ablaufrichtung der Filtration letzte Schlauch 42 den Gehäuseraum 6 gefüllt hat, wird ein Signal zum Einschalten des Elektromotors 17 gegeben. Die Antriebstrommel 16 beginnt sich gegenläufig zu drehen und wickelt die Schläuche 2 und 42 auf. Dadurch verringert sich das Volumen der Ringkammern 43, wobei die Filtration des Mediums weiter geht. Die Schläuche pressen den Rückstand durch die Stutzen 44 aus den Ringkammern 43 in die Abführeinrichtung 11.

Die Schläuche 42 können aus einem elektrisch leitenden Werkstoff bestehen und an außerhalb des Gehäuses 1 angeordnete Spannungsquellen 46 angeschlossen werden, die ein magnetisches oder elektrostatisches Feld erzeugen, wobei das Gehäuse 1 aus einem Elektroisolierstoff hergestellt wird. Während der Filterung setzen sich dabei metallische Beimengungen und elektrisch geladene Teilchen an der Filterfläche der Schläuche 42 ab. Dann werden sie bei der Rückwärtsbewegung der Schläuche 42 in die Abführeinrichtung 11 entfernt, wobei die Spannungsquelle 46 des elektrischen oder magnetischen Feldes abgeschaltet wird.

Bei der Ausführungsform von Fig. 9 ist für eine feinere Filterung der Flüssigkeit im Gehäuse 1 ein Lochstutzen 47 koaxial angeordnet, der mit dem Gehäuse 1 einen Ringraum 48 bildet, der mit der Ableiteinrichtung 10 in Verbindung steht. Dabei steht der Gehäuseraum 6 mit der Zuführeinrichtung 9 und der Gehäuseraum 5 und der Ringraum 43 mit der Abführeinrichtung 11 sowie dem Spülflüssigkeitszuleitungssystem 15 in Verbindung.

Durch die Zuleitung der Spülflüssigkeit in den Gehäuseraum 5 werden die Schläuche 2 und 42 bis zur vollständigen Füllung des Gehäuseraums 6 verschoben. Unter einem den Spülflüssigkeitsdruck überschreitenden Druck wird danach durch die Zuführeinrichtung 9 die zu filternde Flüssigkeit gefördert, die in das Innere der Schläuche einströmt und sie aus dem zentralen Teil wegdrängt, wobei dadurch die Schläuche an die Innenfläche des Gehäuses 1 gelegt werden (in Fig. 9 ist dies mit punktierter Linie angegeben). Die Filtration erfolgt durch die Schlauchlagen im Bereich des Stutzens 47. Das gereinigte Medium strömt durch die Lochungen im Stutzen 47 in den Hohlraum 48 und weiter in die Ableiteinrichtung 10 ein. Nach dem Verstopfen der Schläuche 2 und 42 werden diese unter gleichzeitiger Spülung mit der Spülflüssigkeit aus dem Zuleitungssystem 15 auf

5

die Antriebstrommel 16 aufgewickelt, wodurch der gesamte Rückstand zusammen mit der Spülflüssigkeit in die Abführeinrichtung 11 abgeführt wird.

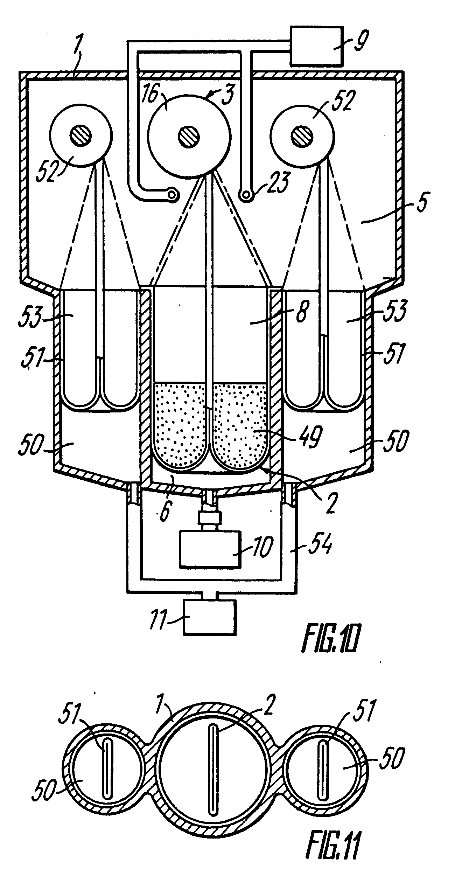

Gemäß der Ausführungsform der Filtervorrichtungen nach Fig. 10 befindet sich ein Filterhilfsmittel 49, z.B. Faserstoff, Sand, Schlacke usw. im Ringraum 8 des Schlauches 2. Dabei sind im Gehäuse 1 Zusatzbehälter 50 vorgesehen, die wie in Fig. 11 gezeigt angeordnet und mit dem oberhalb des Schlauches 2 befindlichen Gehäuseraum 5 verbunden sind.

In jedem Zusatzbehälter 50 ist ein Mittel zum Spülen des Filterhilfsmittels 49 angeordnet, das einen ebenfalls aus Filterstoff bestehenden biegsamen Schlauch 51 und eine Antriebstrommel 52 umfaßt, an der ein Ende des biegsamen Schlauches 51 befestigt ist. Das andere Ende ist mit der Innenseite nach außen gestülpt und längs des Umfanges an den Wänden des Zusatzbehälters 50 unter Bildung eines Ringraumes 53 befestigt. Jeder Zusatzbehälter 50 steht im Unterteil über einem Stutzen 54 mit der Abführeinrichtung 11 in Verbindung.

Der Antrieb der Antriebstrommel 52 ist reversierbar ausgeführt.

Diese Filtervorrichtung wird wie die Filtervorrichtungen von Fig. 1 bis 4 betrieben. Während der Filterung wird das Filterhilfsmittel 49 gespült, wenn sich viel Rückstand an ihm ansammelt. Dabei wird der Schlauch 2 durch die Hebevorrichtung 3 in die obere, mit strichpunktierter Linie angegebene Endstellung gehoben. Die Spül- oder Filtrierflüssigkeit wird durch die Zerstäuberdüsen 23 gefördert. Unter Einwirkung der Spülflüssigkeit und der Eigenmasse läuft das Filterhilfsmittel 49 von der Oberfläche des Schlauches 2 ab und gelangt in den Ringraum 53 der biegsamen Schläuche 51. Die eine Schaukelbewegung ausführenden Antriebstrommeln 52 verschieben hin- und hergehend die Schläuche 51 in den Zusatzbehältern 50. Während der Verschiebung der Schläuche 51 wird das Filterhilfsmittel 49 mit der Flüssigkeit gespült, die aus der Zuführeinrichtung 9 einströmt. Nach der Spülung des Filterhilfsmittels 49 und der Abschaltung der Antriebstrommeln 52 werden die Schläuche 51 in der oberen Endstellung (mit punktierter Linie angegeben) festgestellt und das Filterhilfsmittel in den Ringraum 8 des Schlauches 2 umgeschüttet. Der Filtrationsprozeß geht weiter.

**Patentansprüche**

1. Filtervorrichtung mit einem Gehäuse (1), mit einem schlauchförmigen, unter Bildung eines Ringraumes (8) stülpbaren Filterelement (2), dessen eines Ende (4) am Umfang des Gehäuses (1) befestigt ist und dessen anderes Ende (7) mit einer oberhalb des Filterelements (2) angeordneten Hebevorrichtung (3) verbunden ist, mit einer mit dem Gehäuse (1) verbundenen Zuführeinrichtung (9, 12) für die Zuführung des zu filternden Mediums, mit einer mit dem Gehäuse (1) verbundenen Ableiteinrichtung (10, 13) für das Ableiten des gereinigten Mediums und mit einer Abführeinrichtung (14, 11) für die Rückstandsabführung, dadurch **gekennzeichnet**, daß das Gehäuse (1) geschlossen, druckdicht und durch das Filterelement (2), das während des Filtrierens absenkbar ist, in einen oberen (5) und einen unteren (6) Gehäuseraum getrennt ist, daß die Hebevorrichtung (3) innerhalb des Gehäuses (1) angeordnet ist, und daß die Abführeinrichtung (11, 14) mit dem oberen Gehäuseraum (5) verbunden ist.

2. Filtervorrichtung nach Anpruch 1, dadurch **gekennzeichnet**, daß die Hebevorrichtung (3) von einer Antriebstrommel (16), einem darauf auf- und abwickelbaren, mit dem anderen Ende (7) des Filterelements (2) verbundenen flexiblen Zugglied (20) und einer das Drehmoment der Trommel regelnden Einrichtung (19) gebildet wird.

3. Filtervorrichtung nach Anspruch 2, dadurch **gekennzeichnet**, daß das flexible Zugglied (20) der Hebevorrichtung (3) über einen biegsamen Ring (21) mit dem anderen Ende (7) des Filterelements (2) verbunden ist, wobei beiderseits des Filterelements (2) Zerstäuberdüsen (23) angeordnet sind, die mit der Zuführeinrichtung (9, 12) in Verbindung stehen.

4. Filtervorrichtung nach Anspruch 1, dadurch **gekennzeichnet**, daß beiderseits des Filterelements (2) unterhalb der Hebevorrichtung (3) Kratzer (25) in Form von Lochplatten schräg angebracht sind, die einen mit der Zuführeinrichtung (9, 12) verbundenen Innenkanal (27) aufweisen.

5. Filtervorrichtung nach Anspruch 1, dadurch **gekennzeichnet**, daß der Raum (5) des Gehäuses (1) oberhalb des Filterelements (2) durch eine Trennwand (33) in einen oberen Teil (31) und einen unteren Teil (32) getrennt ist, die einen mit einem Dichtungsmittel (35) versehenen Schlitz (34) aufweist, daß die Hebevorrichtung (3) von einem im oberen Teil (31) vorgesehenen druckdichten Schlauch (30) gebildet wird, dessen eines Ende durch den Schlitz (34) in den unteren Teil (32) geführt und mit dem anderen Ende (7) des Filterelements (2) verbunden ist, während das andere Ende des Schlauches (30) nach außen umgestülpt und unter Bildung einer Ringkammer (37) längs des Umfangs des Gehäuses (1) befestigt ist, und daß die Ringkammer (37) mit einem elastischen Druckmedium gefüllt ist.

6. Filtervorrichtung nach Anspruch 5, dadurch **gekennzeichnet**, daß in der Trennwand (31) mit der Abführeinrichtung (11, 14) verbundene Kanäle (38) vorgesehen sind, die in den unteren Teil (32) einmünden, in dem beiderseits des Filterelements (2) an der Trennwand (33) befestigte Kratzer (41) angeordnet sind.

7. Filtervorrichtung nach Anspruch 1 oder 2 dadurch **gekennzeichnet**, daß innerhalb des Filterelements (2) zusätzliche schlauch förmige Filterelemente (42) koaxial angeordnet sind, deren Enden jeweils mit der Innenseite nach außen gewendet und unter Bildung von mit der Ableiteinrichtung (10) verbundenen Ringkammern (43) längs des Umfangs des Gehäuses (1) aufeinanderfolgend befestigt sind.

8. Filtervorrichtung nach Anspruch 7, dadurch gekennzeichnet, daß die zusätzlichen Filterelemente (42) aus einem elektrisch leitenden Werkstoff bestehen und an außerhalb des Gehäuses (1) angeordnete Spannungsquellen angeschlossen sind, die ein magnetisches oder elektrostatisches Feld erzeugen.

9. Filtervorrichtung nach Anspruch 1, dadurch gekennzeichnet, daß der Ringraum (8) des Filterelements (2) mit einem Filterhilfsmittel (49) gefüllt ist, wobei im Gehäuse (1) mit dem oberen Gehäuseraum (5) verbundene Zusatzbehälter (50) angeordnet sind, von denen jeder in seinem unteren Bereich mit der Abführeinrichtung (11) in Verbindung steht und mit einer Spüleinrichtung zum Spülen des Filterhilfsmittels versehen ist, die von einem biegsamen Schlauch (51) und einer Antriebstrommel (52) gebildet wird, an der ein Ende des biegsamen Schlauchs (51) befestigt ist, während das andere Ende mit der Innenseite nach außen gewendet und längs des Umfangs an den Wänden des Zusatzbehälters (50) befestigt ist.

10. Filtervorrichtung mit einem Gehäuse (1), mit einem schlauchförmigen, unter Bildung eines Ringraumes (8) stülpbaren Filterelement (2), dessen eines Ende (4) am Umfang des Gehäuses (1) befestigt ist und dessen anderes Ende (7) mit einer oberhalb des Filterelements (2) angeordneten Hebevorrichtung (3) verbunden ist, mit einer mit dem Gehäuse (1) verbundenen Zuführeinrichtung (9) für die Zuführung des zu filternden Mediums, mit einer mit dem Gehäuse (1) verbundenen Ableiteinrichtung (10) für das Ableiten des gereinigten Mediums und mit einer Abführeinrichtung (11) für die Rückstandsabführung, dadurch **gekennzeichnet**, daß das Gehäuse (1) geschlossen, druckdicht und durch das Filterelement (2), das während einer Zuleitung von Spülflüssigkeit absenkbar ist, in einen oberen (5) und einen unteren (6) Gehäuseraum getrennt ist, daß die Hebevorrichtung (3) innerhalb des Gehäuses (1) angeordnet ist, daß innerhalb des Filterelements (2) ein zusätzliches schlauchförmiges Filterelement (42) koaxial angeordnet ist, dessen eines Ende mit der Innenseite nach außen gewendet und unter Bildung einer Ringkammer (43) längs des Umfangs des Gehäuses (1) befestigt ist, daß die Abführeinrichtung (11) mit dem oberen Gehäuseraum (5) und dem Ringraum (43) und die Zuführeinrichtung (9) mit dem unteren Gehäuseraum (6) verbunden ist und daß an dem unteren Gehäuseraum (6) ein Lochstutzen (47) angeordnet ist, der mit der Ableiteinrichtung (10) in Verbindung steht, wobei die Filterelemente (2, 42) eine unterschiedliche Dichte aufweisen.

## Claims

1. A filtering device, having a housing (1), a filtering element (2 ) in the form of a tube which can be turned back so as to form an annular space (8) and one end (4) of which is secured to the periphery of the housing (1) and the other end (7) of which is connected to a lifting device (3) arranged above the filtering element (2), a supply device (9, 12) connected to the housing (1) for supplying the medium to be filtered, a discharge device (10, 13) connected to the housing (1) for discharging the cleaned medium, and a removal device (14, 11) for removing the residue, characterized in that the housing (1) is closed, pressure-tight and separated into an upper housing space (5) and a lower housing space (6) by the filtering element (2) which can be lowered during the filtering process, the lifting device (3) is arranged inside the housing (1), and the removal device (11, 14) is connected to the upper housing space (5).

2. A filtering device according to Claim 1, characterized in that the lifting device (3) is formed from a driving drum (16), a flexible traction member (20) which can be wound onto and off from the said driving drum (16) and is connected to the other end (7) of the filtering element (2), and a device (19) which regulates the torque of the drum.

3. A filtering device according to Claim 2, characterized in that the flexible traction member (20) of the lifting device (3) is connected to the other end (7) of the filtering element (2) by way of a flexible ring (21), spray nozzles (23) connected to the supply device (9, 12) being arranged on both sides of the filtering element (2).

4. A filtering device according to Claim 1, characterized in that scraping means (25) in the form of perforated plates, having an internal duct (27) connected to the supply device (9, 12), are arranged obliquely on both sides of the filtering element (2) below the lifting device (3).

5. A filtering device according to Claim 1, characterized in that the space (5) of the housing (1) above the filtering element (2) is divided by a partition wall (33) into an upper part (31) and a lower part (32), the partition wall (33) having a slot (34) provided with a sealing means (35), the lifting device (3) is formed from a pressure-tight tube (30) which is provided in the upper part (31) and one end of which passes through the slot (34) into the lower part (32) and is joined to the other end (7) of the filtering element (2), while the other end of the tube (30) is turned back towards the outside and is secured along the periphery of the housing (1) so as to form an annular space (37), and the annular space (37) is filled with a resilient pressure medium.

6. A filtering device according to Claim 5, characterized in that ducts (38) connected to the removal device (11, 14) are provided in the partition wall (33), the ducts (38) opening into the lower part (32) in which scraping means (41) secured to the partition wall (33) are arranged on both sides of the filtering element (2).

7. A filtering device according to Claim 1 or 2, characterized in that additional tubular filtering elements (42), the ends of which are each turned with their inside outwards and are secured in succession along the periphery of the housing (1) so as to form annular spaces (43) connected to the discharge device (10), are arranged coaxially inside the filtering element (2).

8. A filtering device according to Claim 7, characterized in that the additional filtering elements (42) consist of an electrically conductive material and are connected to voltage sources which are arranged outside the housing (1) and which generate a magnetic or electrostatic field.

9. A filtering device according to Claim 1, characterized in that the annular space (8) of the filtering element (2) is filled with a filtering aid (49), the housing (1) containing additional containers (50) which are connected to the upper housing space (5) and each of which is connected in its lower region to the removal device (11) and is provided with a rinsing device for rinsing the filtering aid, the rinsing device being formed by a flexible tube (51) and a driving drum (52) to which one end of the flexible tube (51) is secured, while the other end is turned with the inside outwards and is secured to the walls of the additional container (50) along the periphery.

10. A filtering device, having a housing (1), a filtering element (2) in the form of a tube which can be turned back so as to form an annular space (8) and one end (4) of which is secured to the periphery of the housing (1) and the other end (7) of which is connected to a lifting device (3 ) arranged above the filtering element (2), a supply device (9) connected to the housing (1) for supplying the medium to be filtered, a discharge device (10) connected to the housing (1) for discharging the cleaned medium, and a removal device (11) for removing the residue, characterized in that the housing (1) is closed, pressure-tight and separated into an upper housing space (5) and a lower housing space (6) by the filtering element (2) which can be lowered during a supply of rinsing liquid, the lifting device (3) is arranged inside the housing (1), an additional filtering element (42) in the form of a tube, one end of which is turned with its inside outwards and is secured along the periphery of the housing (1) so as to form an annular space (43), is arranged coaxially inside the filtering element (2), the removal device (11) is connected to the upper housing space (5) and the annular space (43) and the supply device (9) is connected to the lower housing space (6), and a perforated connecting socket (47) which is connected to the discharge device (10) is arranged in the lower housing space (6), the filtering elements (2, 42) being of different thicknesses.

## Revendications

1. Dispositif de filtrage avec un boîtier (1), avec un élément de filtre (2) retournable en formant un espace annulaire (8), en forme de tuyau flexible, dont une extrémité (4) est fixée au pourtour du boîtier (1) et dont l'autre extrémité (7) est reliée à un dispositif de levage (3) agencé au-dessus de l'élément de filtre (2), avec un système d'amenée (9, 12) relié au boîtier (1) pour l'amenée du milieu liquide à filtrer, avec un système de sortie (10, 13) relié au boîtier (1) pour la sortie du milieu purifié et avec un système d'enlèvement (14, 11) pour l'enlèvement des résidus, caractérisé en ce que le boîtier (1) fermé et résistant à la pression est divisé par l'élément de filtre (2), qui peut être abaissé pendant que l'on filtre, en un espace supérieur (5) et un espace inférieur (6), en ce que le dispositif de levage (3) est agencé à l'intérieur du boîtier (1) et en ce que le système d'enlèvement (11, 14) est relié à l'espace supérieur (5) du boîtier .

2. Dispositif de filtrage selon la revendication 1, caractérisé en ce que le dispositif de levage (3) est formé d'un tambour d'entraînement (16) d'un organe flexible de traction (20) qui peut y être enroulé et en être déroulé, et qui est relié à l'autre extrémité (7) de l'élément de filtre (2) et d'un système (19) réglant le couple de rotation du tambour.

3. Dispositif de filtrage selon la revendication 2, caractérisé en ce que l'organe flexible de traction (20) du dispositif de levage (3) est relié, par une bague flexible (21), à l'autre extrémité (7) de l'élément de filtre (2) et des deux côtés de l'élément de filtre (2) sont agencés des diffuseurs (23) qui sont en liaison avec le système d'amenée (9, 12).

4. Dispositif de filtrage selon la revendication 1, caractérisé en ce que des deux côtés de l'élément de filtre (2) sont prévus , en dessous du dispositif de levage (3), des racloirs (25) sous la forme de plaques perforées obliques, qui présentent un canal interne (27) relié au système d'amenée (9, 12).

5. Dispositif de filtrage selon la revendication 1, caractérisé en ce que l'espace (5) du boîtier (1), au-dessus de l'élément de filtre (2), est séparé par une paroi (33) en une partie supérieure (31) et une partie inférieure (32), qui présente une fente (34) pourvue d'un moyen d'étanchéité (35), en ce que le dispositif de levage (3) est formé d'un tuyau flexible étanche à la pression (30) qui est prévu dans la partie supérieure (31), dont une extrémité est menée à travers la fente (34) dans la partie inférieure (32) et est reliée à l'autre extrémité (7) de l'élément de filtre (2) tandis que l'autre extrémité du tuyau flexible (30) est déroulée vers l'extérieur et est fixée le long du pourtour du boîtier (1) en formant une chambre annulaire (37), et en ce que la chambre annulaire (37) est remplie d'un fluide élastique sous pression.

6. Dispositif de filtrage selon la revendication 5, caractérisé en ce que,dans la paroi de séparation (33) , sont prévus des canaux (38) reliés au système d'enlèvement (11, 14), qui débouchent dans la partie inférieure (32), où sont agencés les racloirs (41) des deux côtés de l'élément de filtre (32) sur la paroi de séparation (33).

7. Dispositif de filtrage selon la revendication 1 ou 2, caractérisé en ce qu'à l'intérieur de l'élément de filtre (2) sont agencés coaxialement des éléments supplémentaires de filtre en forme de tuyaux flexibles (42), dont les extrémités sont fixées à chaque fois avec leur côté interne retourné vers l'extérieur et en formant des chambres annulaires (43) reliées au système de départ (10) selon le pourtour du boîtier (1), en se suivant.

8. Dispositif de filtrage selon la revendication 7, caractérisé en ce que les éléments supplémentaires de filtre (42) se composent d'un matériau électriquement conducteur et sont raccordés à des sources de tension agencées en dehors du boîtier (1), qui produisent un champ magnétique ou électrostatique.

9. Dispositif de filtrage selon la revendication 1, caractérisé en ce que l'espace annulaire (8) de l'élément de filtre (12) est rempli d'un auxiliaire de filtrage (49), et dans le boîtier (1) sont agencés des récipients supplémentaires (50) qui sont reliés à l'espace supérieur (5), chacun d'entre eux étant en liaison à sa partie inférieure avec le système d'enlèvement (11) et avec un système de rinçage pour le rinçage de l'auxiliaire de filtrage, lequel est formé d'un tuyau flexible (51) et d'un tambour d'entraînement (52), sur lequel est fixée une extrémité du tuyau flexible (51) tandis que l'autre extrémité est fixée, avec son côté interne retourné vers l'extérieur et le long du pourtour, sur les parois du récipient supplémentaire (50).

10. Dispositif de filtrage avec un boîtier (1), avec un élément de filtre (2) en forme de tuyau flexible, retournable en formant un espace annulaire (8), dont une extrémité (4) est fixée au pourtour du boîtier (1) et dont l'autre extrémité (7) est reliée à un dispositif de levage (3) agencé au-dessus de l'élément de filtre (2), avec un système d'amenée (9) relié au boîtier (1) pour l'amenée du milieu à filtrer, avec un système de départ (10) pour la sortie du milieu épuré et avec un système d'enlèvement pour l'enlèvement des résidus, caractérisé en ce que le boîtier (1) est fermé, résistant à la pression et en ce que l'élément de filtre (2) qui peut être abaissé pendant une arrivée d'un liquide de rinçage, est séparé en une partie supérieure (5) et une partie inférieure (6), en ce que le dispositif de levage (3) est agencé à l'intérieur du boîtier (1), en ce qu'à l'intérieur de l'élément de filtre (2) est agencé un élément de filtre supplémentaire (42) en forme de tuyau flexible, coaxialement, dont une extrémité est fixée avec son côté interne tourné vers l'extérieur et en formant une chambre annulaire (43) le long du pourtour du boîtier (1), en ce que le système d'enlèvement (11) est relié à l'espace supérieur (5) du boîtier et à l'espace annulaire (43) et le système d'amenée (9) est relié à l'espace supérieur du boîtier (6) et en ce qu'à l'espace inférieur du boîtier (6) est agencé un manchon (47) qui est en liaison avec le système de départ (10) et les éléments de filtre (2 et 42) présentent une épaisseur différente.

FIG.1

FIG.2

FIG.3

EP 0 253 899 B1

FIG.5

FIG.7

FIG.4

FIG.6

12

FIG.8

FIG.9

FIG.10

FIG.11